# EUROPÄISCHE PATENTANMELDUNG

(11) **EP 0 733 402 A1**
(43) Veröffentlichungstag der Anmeldung: **25.09.1996**
(21) Anmeldenummer: 96104239.7
(22) Anmeldetag: 18.03.1996
(51) Int. Cl.: B01J 19/30

(54) **Füllkörper für Stoff- oder Wärmeaustauschkolonnen**

(30) Priorität: 18.03.1995 DE 19509988
(71) Anmelder: Raschig AG, D-67061 Ludwigshafen (DE)
(72) Erfinder: Grosshans, Werner, 67126 Hochdorf-Assenheim (DE)
(74) Vertreter: Twelmeier, Ulrich, Dipl.Phys.

(57) **Zusammenfassung**

Beschrieben wird ein Füllkörper für eine Gas- oder Wärmeaustauschkolonne, der einen drei Ringelemente (2a-2c) aufweisenden Ringkörper (2) besitzt, bei dem durch das untere (2a) und das mittlere Ringelement (2b) sowie eine Anzahl von im wesentlichen orthogonal zu den beiden Ringelementen (2a, 2b) verlaufenden Fensterstegen eine untere Reihe (3) von Fenstern (3a-3h) und durch das mittlere (2b) und das obere Ringelement (2c) sowie eine Anzahl von weiteren Fensterstegen eine obere Reihe (4) von Fenstern (4a-4h) begrenzt wird, wobei Fensterstege durch Kreuzstege (6a, 6b) verbunden sind.

Erfindungsgemäß ist vorgesehen, daß einander zugeordnete Fenster (3a-3h; 4a-4h) der unteren (3) und der oberen Reihe (4) im wesentlichen übereinanderliegend angeordnet sind, so daß jeweils ein Fenster (3a-3h) der unteren Reihe (3) begrenzender Fenstersteg und ein Fenster (4a-4h) der oberen Reihe (4) begrenzender weiterer Fenstersteg miteinander fluchten und jeweils einen gemeinsamen Fenstersteg (3a-5h) ausbilden, daß zwischen jeweils zwei mit einem Kreuzsteg (6a, 6b) verbundenen Fensterstegen (5a, 5c, 5e, 5g) in Umfangsrichtung des Füllkörpers (1) mindestens ein Fenstersteg (5b, 5d, 5f, 5h) angeordnet ist, der nicht mit einem Kreuzsteg (6a, 6b) verbunden ist, und daß die einander gegenüberliegende Fensterstege (5a, 5c, 5e, 5g) verbindende Kreuzstege (6a, 6b) im Bereich des mittleren Ringelements (2b) im wesentlichen in einer gemeinsamen Ebene liegen.

## Beschreibung

Die Erfindung betrifft einen Füllkörper für Stoff- und Wärmeaustauschkolonnen, der einen drei Ringelemente aufweisenden Ringkörper besitzt, bei dem durch das untere und das mittlere Ringelement sowie eine Anzahl von im wesentlichen orthogonal zu den beiden Ringelementen verlaufenden Fensterstegen eine untere Reihe von Fenstern und durch das mittlere und das obere Ringelement sowie eine Anzahl von weiteren Fensterstegen eine obere Reihe von Fenstern begrenzt wird, wobei Fensterstege durch Kreuzstege verbunden sind.

Ein derartiger aus Kunststoff gefertigter Füllkörper ist aus dem deutschen Gebrauchsmuster G 82 12 260 bekannt. Hierbei ist vorgesehen, daß pro Fensterreihe jeweils sechs Fenster vorgesehen sind, die durch die im wesentlichen orthogonal zu den Ringelementen verlaufenden sechs Fensterstegen voneinander abgegrenzt sind, wobei die äquidistant angeordneten Fenster der oberen Fensterreihe des Rings zu den ebenfalls äquidistant angeordneten Fenstern der unteren Fensterreihe um jeweils ca. 45° versetzt angeordnet sind. In jeder Reihe von Fenstern sind die diametral gegenüberliegenden Fensterstege durch einen Kreuzsteg verbunden, der jeweils über die halbe Fensterhöhe reicht und sich an der Stegbefestigungsstelle des Kreuzstegs mit dem zugeordneten Fenstersteg über die gesamte Fensterhöhe mit schrägem Anschnitt verbreitert. Im Innenraum des aus den drei Ringelementen bestehenden Kunststoffrings verlaufen somit sechs Kreuzstege der oberen Fensterreihe und hierzu versetzt sechs weitere Kreuzstege der unteren Fensterreihe. Eine derartige Konstruktion bewirkt zwar, daß eine hinreichende mechanische Festigkeit des bekannten Füllkörpers für Kolonnen gegeben ist; sie besitzt jedoch den Nachteil, daß durch die große Anzahl von im Inneren des Kunststoffrings verlaufenden Kreuzstege die Durchlässigkeit des bekannten Füllkörpers reduziert wird. Dieser Effekt tritt insbesondere dann auf, wenn Feststoffpartikel enthaltende Suspensionen über und durch den bekannten Füllkörper geleitet werden, da die Kreuzstege eine Vielzahl von Ansatzpunkten für eine Ablagerung der in der Suspension enthaltenen Feststoffpartikel ausbilden. Dies führt in besonders nachteiliger Art und Weise dazu, daß der Kunststoffring durch diese Ablagerungen de facto zuwächst, so daß sein freier Querschnitt unter drastischer Verminderung des Durchgangs immer kleiner wird. Nach einer gewissen Zeit ist die Effizienz und die Wirtschaftlichkeit derart vermindert, daß in nachteiliger Art und Weise sämtliche Füllkörper der Kolonne ausgetauscht werden müssen. Um die für den Einsatz in Suspensions-Kolonnen erforderliche mechanische Stabilität zu gewährleisten, ist beim bekannten Füllkörper desweiteren vorgesehen, daß die untere und die obere Fensterreihe jeweils am äußeren Fensterrand umlaufende Erweiterungen aufweisen. Diese vier zusätzlichen Erweiterungen komplizieren in nachteiliger Art und Weise den Herstellungsvorgang, da dadurch die hierfür erforderliche Spritzform aufwendiger aufgebaut ist.

Es ist daher Aufgabe der vorliegenden Erfindung, einen Füllkörper der eingangs genannten Art derart weiterzubilden, daß bei einem vereinfachten Aufbau des erfindungsgemäßen Füllkörpers eine hinreichend hohe mechanische Stabilität gewährleistet ist.

Diese Aufgabe wird erfindungsgemäß dadurch gelöst, daß einander zugeordnete Fenster der unteren und der oberen Reihe im wesentlichen übereinanderliegend angeordnet sind, so daß jeweils ein Fenster der unteren Reihe begrenzender Fenstersteg und ein Fenster der oberen Reihe begrenzender weiterer Fenstersteg miteinander fluchten und jeweils einen gemeinsamen Fenstersteg ausbilden, daß zwischen jeweils zwei mit einem Kreuzsteg verbundenen Fensterstegen in Umfangsrichtung des Füllkörpers mindestens ein Fenstersteg angeordnet ist, der nicht mit einem Kreuzsteg verbunden ist, daß die einander gegenüberliegende Fensterstege verbindenden Kreuzstege in einer gemeinsamen Ebene liegen.

Durch die erfindungsgemäßen Maßnahmen wird in vorteilhafter Art und Weise ein besonders stabiler Füllkörper ausgebildet, bei dem in vorteilhafter Art und Weise in seinem Innenraum eine minimale Anzahl von Kreuzstegen vorgesehen ist. Vorzugsweise kreuzen sich die Kreuzstege des erfindungsgemäßen Füllkörpers im Mittelpunkt des ringförmigen Füllkörpers in einem stumpfen Winkel, oder orthogonal. Durch die wenigen im Innenraum des Füllkörpers verlaufenden Kreuzstege wird in vorteilhafter Art und Weise eine höhere mechanische Stabilität des erfindungsgemäßen Füllkörpers als beim bekannten Füllkörper erreicht, wobei aber gleichzeitig dessen für den Gas- oder Wärmeaustausch relevanten Eigenschaften verbessert oder zumindest erhalten bleibt. In vorteilhafter Art und Weise bewirkt die bevorzugte Orthogonalität benachbarter Kreuzstege, daß beim erfindungsgemäßen Füllkörper deutlich weniger Ansatzpunkte für eine Ablagerung der in der Suspension befindlichen Feststoffpartikel vorhanden sind als beim bekannten gattungsgemäßen Füllkörper, so daß das beim bekannten Füllkörper beobachtete Zuwachsen desselben nicht mehr auftritt.

Eine vorteilhafte Weiterbildung der Erfindung sieht vor, daß die obere und die untere Reihe von Fenstern jeweils acht Fenster, die durch acht im wesentlichen orthogonal zu den Ringelementen verlaufende Fensterstege begrenzt sind, aufweisen, und daß jeweils jeder zweite Fenstersteg mit seinem diametral gegenüberliegenden Fenstersteg durch einen Kreuzsteg verbunden ist. Eine derartige Ausbildung des erfindungsgemäßen Füllkörpers zeichnet sich durch eine besonders optimale Kombination von mechanischer Stabilität und für den Gas- oder Wärmeaustausch relevanten Eigenschaften aus.

Ein weitere vorteilhafte Weiterbildung der Erfindung sieht vor, daß der Füllkörper derart dimensioniert ist, daß seine Höhe kleiner ist als sein Durchmesser. Hierdurch wird in vorteilhafter Art und Weise eine erhöhte Anzahl von Abtropfstellen pro Volumeneinheit erreicht, wodurch die Stoff- oder Wärmeaustauscheigenschaften des erfindungsgemäßen Füllkörpers verbessert werden.

Eine weitere vorteilhafte Weiterbildung der Erfindung sieht vor, daß zumindest in der vertikalen Symmetrieebene des erfindungsgemäßen Füllkörpers ein nach außen vorspringender, umlaufender Flansch vorgesehen ist. Diese Maßnahme resultiert in einer weiteren Erhöhung der mechanischen Festigkeit.

Eine weitere vorteilhafte Weiterbildung der Erfindung sieht vor, daß zusätzlich zu dem vorgenannten, in der Mitte des Füllkörpers angeordneten Ringflansch noch mindestens ein, vorzugsweise aber zwei nach außen vorspringende und umlaufende weitere Ringflansche vorgesehen sind, die am unteren und/oder oberen Rand des unteren und/oder oberen Ringelements des erfindungsgemäßen Füllkörpers angeordnet sind. Hierbei wird in vorteilhafter Art und Weise eine weitere Erhöhung der mechanischen Stabilität erreicht.

Eine weitere vorteilhafte Weiterbildung der Erfindung zeichnet sich dadurch aus, daß der erfindungsgemäße Füllkörper aus Keramik hergestellt ist. Diese Maßnahme bewirkt in vorteilhafter Art und Weise, daß ein derart ausgebildeter erfindungsgemäßer Füllkörper ein chemisch inertes Verhalten, eine hohe Beständigkeit gegenüber chemischen Einflüssen und eine hohe Temperaturbeständigkeit aufweist.

Weitere Einzelheiten der Erfindung sind dem Ausführungsbeispiel zu entnehmen, das im folgenden anhand der Figuren beschrieben wird. Es zeigen:
- Figur 1: eine Seitenansicht eines Ausführungsbeispiels des Füllkörpers,
- Figur 2: eine Draufsicht auf das Ausführungsbeispiel aus der Richtung II der Figur 1,
und
- Figur 3: einen Schnitt entlang der Linie III-III der Figur 2.

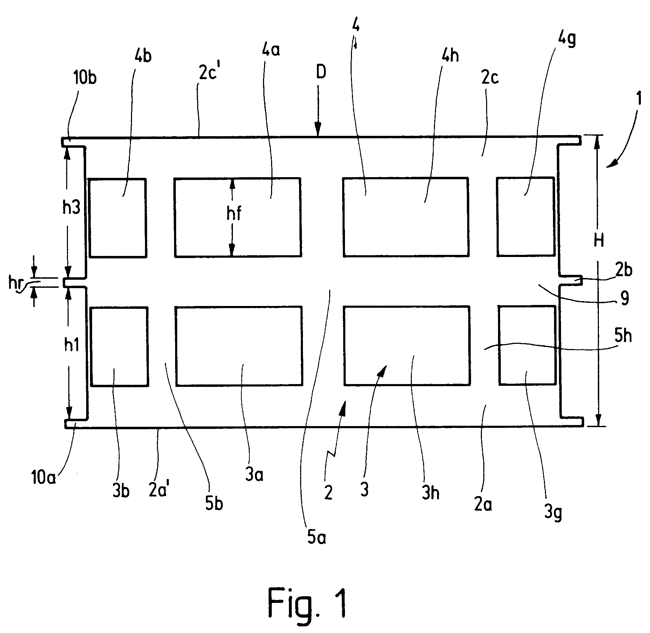

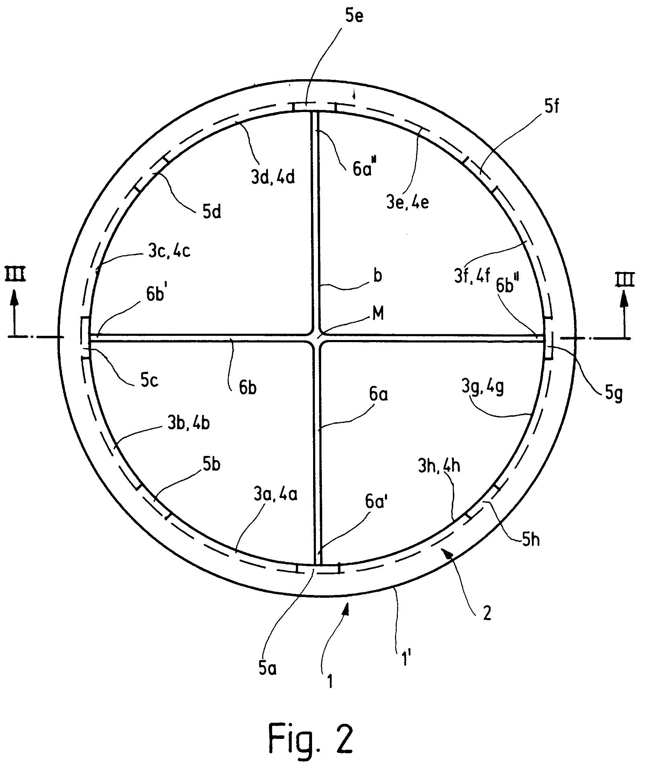

Das in den Figuren 1 bis 3 dargestellte Ausführungsbeispiel eines Füllkörpers 1, der insbesondere für einen Einsatz in Gas- oder Wärmeaustauschkolonnen für Feststoffpartikel enthaltende Suspensionen geeignet ist, weist einen Ringkörper 2 mit einem unteren Ringelement 2a, einem mittleren Ringelement 2b und einem oberen Ringelement 2c auf. Das untere Ringelement 2a und das mittlere Ringelement 2b begrenzen eine Reihe von acht Fenstern 3a-3h, deren äquidistante Anordnung entlang des Umfangs 1' des ringförmigen Füllkörpers 1 am besten aus Figur 2 ersichtlich ist. In entsprechender Art und Weise begrenzen das mittlere Ringelement 2b und das obere Ringelement 2c eine oberer Reihe von Fenstern 4a-4h. Hierbei ist vorgesehen, daß jeweils einander entsprechende Fenster 3a, 4a, 3b, 4b...3h, 4h jeweils im wesentlichen übereinanderliegen, so daß jeweils ein Paar voneinander Zugeordneten Fenstern 3a und 4a,...,3h und 4h der oberen und unteren Fensterreihe 3, 4 jeweils von einem gemeinsamen, im wesentlichen orthogonal zu den Ringelementen 2a-2c des Füllkörpers 1 verlaufenden Fenstersteg 5a-5h begrenzt wird.

Wie nun am besten aus Figur 2 ersichtlich ist, ist nur jeder zweite Fenstersteg 5a, 5c, 5e und 5g durch jeweils einen von einem Fenstersteg 5a bzw. 5c zu dem diametral gegenüberliegenden Fenstersteg 5e bzw. 5g verlaufenden Kreuzsteg 6a bzw. 6b verbunden, wobei die Kreuzstege 6a, 6b in einer gemeinsamen Ebene liegen und sich - wie am besten aus Figur 2 ersichtlich ist - im Mittelpunkt M des Füllkörpers 1 im wesentlichen orthogonal kreuzen. Durch diesen großen Winkel zwischen den beiden Stegen 6a und 6b wird bewirkt, daß einer an den Kreuzungsstellen der Kreuzstege 6a, 6b beginnenden Ablagerung von in der Suspension enthaltenen Feststoffpartikel wirksam entgegengewirkt wird, wie sie bei dem bekannten Füllkörper, der eine Vielzahl von in seinem Innenraum verlaufenden Kreuzstegen aufweist, auftritt.

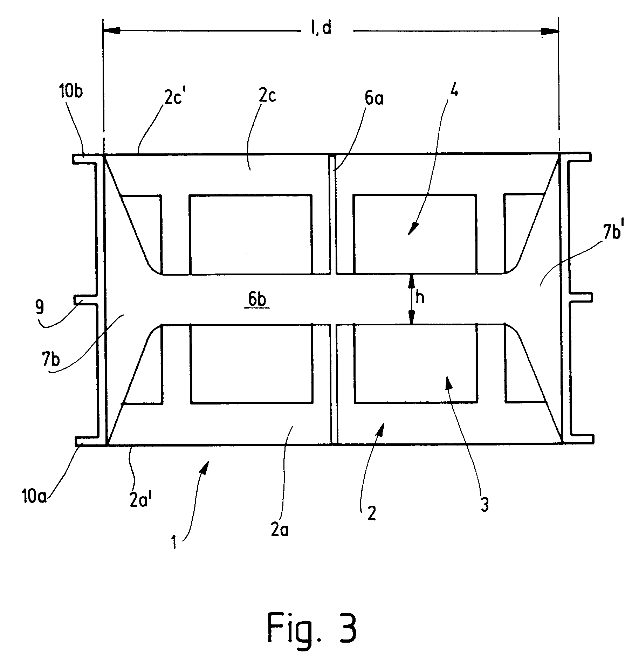

Die Kreuzstege 6a, 6b erweitern sich - wie am besten aus Figur 3 ersichtlich ist - an ihren äußeren Endbereichen 6a', 6a'' bzw. 6b', 6b'' zu schrägen Anschnitten 7a, 7a' bzw. 7b und 7b', welche im wesentlichen bis zum oberen Rand 2c' des oberen Ringelements 2c und dem unteren Rand 2a' des unteren Ringelements 2a des Füllkörpers 1 reichen. Von Vorteil hierbei ist es, wenn der Endbereich 6a', 6a'' bzw. 6b', 6b'', in dem der Kreuzsteg 6a, 6b von seiner Steghöhe h, welche vorzugsweise kleiner oder höchstens gleich der Höhe h2 des mittleren Ringelements 2b beträgt, über die schrägen Anschnitte 7a, 7a' und 7b, 7b' auf eine Höhe übergeht, die im wesentlichen gleich der Höhe H des Füllkörpers 1 ist, relative gering ist im Vergleich zur Gesamtlänge I der Kreuzstege 6a, 6b, wobei die Länge I der beiden den Füllkörper 1 diametral durchsetzenden Kreuzstege 6a, 6b im wesentlichen gleich dem Innendurchmesser d des Füllkörpers 1 ist. Vorzugsweise beträgt die Länge des Endbereichs 6a', 6a'' bzw. 6b', 6b'' jedes der Kreuzstege 6a, 6b in etwa 1/6 bis 1/14 der Länge I. Besonders vorteilhafte Abmessungen werden weiter unten noch angegeben werden.

Bezüglich der Dimensionierung der Kreuzstege 6a, 6b ist desweiteren anzuführen, daß deren Breite b deutlich geringer als deren Höhe h ist, so daß die Kreuzstege 6a, 6b nur einen geringen Strömungswiderstand, insbesondere in der Axialrichtung des Füllkörpers 1, ausbilden. Ein bevorzugtes Verhältnis von Breite zu Höhe der Kreuzstege 6a, 6b beträgt hierbei b: h = 1:6 bis 1:12.

Der beschriebene Füllkörper 1 zeichnet sich in der bis jetzt geschilderten Ausführungsart bereits durch eine hohe mechanische Stabilität aus, welche in vorteilhafter Art und Weise aber noch dadurch gesteigert werden kann, daß in der horizontalen Symmetrieebene des Füllkörpers 1 ein nach außen vorspringender umlaufender Flansch 9 vorgesehen ist. Desweiteren kann noch optional vorgesehen sein, daß außer dem vorstehend genannten Mittelflansch 9 noch ein oder zwei weitere Flansche 10a, 10b vorgesehen sind, die am unteren Rand 2a' des unteren Ringelements 2a und/oder am oberen Rand 2c' des oberen Ringelements 2c des Füllkörpers 1 angeordnet sind.

Eine besonders vorteilhafte Ausgestaltung des beschriebenen Füllkörpers 1 besteht darin, daß seine Höhe H deutlich geringer als sein Außendurchmesser D ausgebildet ist, wobei ein Verhältnis von D:H von 1:1,5 bis 1:2 bevorzugt wird. Eine derartige Ausgestaltung besitzt den Vorteil, daß eine optimale Anzahl von Abtropfstellen pro Volumeneinheit ausgebildet wird.

Abschließend sollen noch die speziellen Werte einer besonders vorteilhaften Ausgestaltung des Füllkörpers 1 angegeben werden, wobei betont werden muß, daß eine millimetergenaue Einhaltung der beschriebenen Werte nicht zwingend ist, und daß dem Fachmann ohne weiteres ersichtlich ist, daß auch bei einer Auswahl von in der Umgebung der genannten Werte liegenden Dimensionierung die gewünschten Eigenschaften des beschriebenen Füllkörpers 1 eintreten: Bevorzugt ist also eine Ausgestaltung des Füllkörpers 1 mit einer Höhe H von 70 mm und einem Innen- bzw. Außendurchmesser D bzw. d von 125 bzw. 110 mm, wobei die Wandstärke L der drei Ringelemente 2a-2c und der Fensterstege 5a-5h vorzugsweise 1,5 mm beträgt. Die Breite äquidistant entlang des Umfangs 1' des Füllkörpers 1 angeordneten der Fensterstege 5a-5h ist hierbei in der bevorzugten Ausgestaltung etwa 10 mm, . Die Höhe h1 bzw. h3 des unteren bzw. des oberen Ringelements 2a bzw. 2c beträgt in etwa 10 mm, während das mittlere Ringelement 2b in etwa h2=12 mm hoch ist, woraus eine Höhe hf der Fenster 3a-3h, 4a-4h von in etwa 19 mm resultiert.

Die Höhe h der Kreuzstege 6a, 6b beträgt bevorzugterweise in etwa 12 mm, wobei die Kreuzstege 6a, 6b vorzugsweise eine Breite b von 1 bis 2 mm, vorzugsweise 1,5 mm aufweisen. Die Länge der Endbereiche 6a', 6a'', 6b', 6b'' und somit die Radialerstreckung der Anschnitte 7a, 7a', 7b, 7b' beträgt hierbei vorzugsweise 10-20 mm und insbesondere 15 mm.

Die optional vorgesehenen, nach außen vorspringenden Flansche 9 und 10a, 10b weisen hierbei eine Höhe hr von vorzugsweise 2 mm auf und stehen von der Außenwand des Füllkörpers 1 in etwa 6 mm vor. Der Endbereich 6a', 6a'', 6b', 6b'' der Kreuzstege 6a, 6b, in dem sie über die schrägen Anschnitte 7a, 7a', 7b, 7b' von ihrer Höhe h auf die Höhe H des Füllkörpers 1 übergehen, beträgt vorzugsweise 15 mm.

Im allgemeinen wird der beschriebene Füllkörper 1 aus Kunststoff gefertigt sein, so daß er besonders einfach durch ein an und für sich bekanntes Spritzgießverfahren hergestellt werden kann, wobei sein geometrisch einfacher Aufbau aufgrund der hierfür nur erforderlichen einfachen Spritzform eine besonders kostengünstige Herstellung erlaubt. Es ist aber auch möglich, den beschriebenen Füllkörper 1 aus Metall herzustellen, insbesondere aus einem Blechband zu stanzen.

Die besonders einfache geometrisch-konstruktive Ausführung des beschriebenen Füllkörpers 1 erlaubt es aber auch, diesen aus Keramik zu fertigen, wobei sich dieser Werkstoff insbesondere durch sein chemisch inertes Verhalten, seine Beständigkeit gegenüber chemischen Einflüssen und durch seine hohe Temperaturbeständigkeit, welche einen Einsatz bis zu einer Kolonnentemperatur von 700-800C erlaubt, auszeichnet.

## Patentansprüche

1. Füllkörper für eine Gas- oder Wärmeaustauschkolonne, der einen drei Ringelemente (2a-2c) aufweisenden Ringkörper (2) besitzt, bei dem durch das untere (2a) und das mittlere Ringelement (2b) sowie eine Anzahl von im wesentlichen orthogonal zu den beiden Ringelementen (2a, 2b) verlaufenden Fensterstegen eine untere Reihe (3) von Fenstern (3a-3h) und durch das mittlere (2b) und das obere Ringelement (2c) sowie eine Anzahl von weiteren Fensterstegen eine obere Reihe (4) von Fenstern (4a-4h) begrenzt wird, wobei Fensterstege durch Kreuzstege (6a, 6b) verbunden sind, dadurch gekennzeichnet, daß einander zugeordnete Fenster (3a-3h; 4a-4h) der unteren (3) und der oberen Reihe (4) im wesentlichen übereinanderliegend angeordnet sind, so daß jeweils ein Fenster (3a-3h) der unteren Reihe (3) begrenzender Fenstersteg und ein Fenster (4a-4h) der oberen Reihe (4) begrenzender weiterer Fenstersteg miteinander fluchten und jeweils einen gemeinsamen Fenstersteg (5a-5h) ausbilden, daß zwischen jeweils zwei mit einem Kreuzsteg (6a, 6b) verbundenen Fenstersteg (5a, 5c, 5e, 5g) in Umfangsrichtung des Füllkörpers (1) mindestens ein Fenstersteg (5b, 5d, 5f, 5h) angeordnet ist, der nicht mit einem Kreuzsteg (6a, 6b) verbunden ist, und daß die einander gegenüberliegende Fensterstege (5a, 5c, 5e, 5g) verbindende Kreuzstege (6a, 6b) im Bereich des mittleren Ringelements (2b) im wesentlichen in einer gemeinsamen Ebene liegen.

2. Füllkörper nach Anspruch 1, dadurch gekennzeichnet, daß mindestens ein Kreuzsteg (6a, 6b) sich von einer Höhe (h), die im wesentlichen kleiner oder höchstens gleich der Höhe (h2) des mittleren Ringelements (2b) ist, über einen schrägen Anschnitt (7a', 7a''; 7b', 7b'') im wesentlichen auf die Höhe (H) des Füllkörpers (1) erweitert.

3. Füllkörper nach Anspruch 1 oder 2, dadurch gekennzeichnet, daß die obere (3) und die untere Reihe (4) von Fenstern (3a-3h; 4a-4h) jeweils acht Fenster (3a-3h; 4a-4h), die durch acht im wesentlichen orthogonal zu den Ringelementen (2a-2c) verlaufende Fensterstege (5a-5h) begrenzt sind, aufweisen, und daß jeweils jeder zweite Fenstersteg mit seinem diametral gegenüberliegenden Fenstersteg (5a, 5c, 5e, 5g) durch einen Kreuzsteg (6a, 6b) verbunden ist.

4. Füllkörper nach einem der Ansprüche 1 bis 3, dadurch gekennzeichnet, daß die Höhe (h) mindestens eines Fensterstegs (6a, 6b) größer als die Breite (b) des Fensterstegs (6a, 6b) ist.

5. Füllkörper nach Anspruch 4, dadurch gekennzeichnet, daß das Verhältnis von Höhe (h) zu Breite (b) des Kreuzstegs (6a, 6b) in etwa 1:6 bis in etwa 1:12 beträgt.

6. Füllkörper nach Anspruch 5, dadurch gekennzeichnet, daß die Breite (b) mindestens eines Kreuzstegs (6a, 6b)
1-2 mm, vorzugsweise 1,5 mm, und die Höhe (h) in etwa
10-15 mm, vorzugsweise 12 mm, beträgt.

7. Füllkörper nach einem der vorangehenden Ansprüche, dadurch gekennzeichnet, daß mindestens ein Endbereich (6a, 6a'; 6b, 6b') des Kreuzstegs (6a, 6b) eine Länge aufweist, die in etwa 1/6 bis in etwa 1/14 der Länge (I) des Kreuzstegs (6a, 6b) beträgt.

8. Füllkörper nach Anspruch 7, dadurch gekennzeichnet, daß die Länge des Übergangsbereichs (6a', 6a''; 6b', 6b'') in etwa 10-20 mm, vorzugsweise 15 mm, beträgt.

9. Füllkörper nach einem der vorangehenden Ansprüche, dadurch gekennzeichnet, daß der Füllkörper (1) mindestens einen von seiner Außenfläche (1') vorspringenden Flansch (9; 10a, 10b) aufweist.

10. Füllkörper nach Anspruch 7, dadurch gekennzeichnet, daß mindestens ein vorspringender Flansch (9) in der Mittelebene des Füllkörpers (1) angeordnet ist.

11. Füllkörper nach Anspruch 9 oder 10, dadurch gekennzeichnet, daß mindestens ein Flansch (10a, 10b) am oberen Rand (2c') des oberen Ringelements (2c) und/oder am unteren Rand (2a') des unteren Ringelements (2a) des Füllkörpers (1) angeordnet ist.

12. Füllkörper nach Anspruch 11, dadurch gekennzeichnet, daß der Vorsprung des Flansches (9, 10a, 10b) über die Außenwand des Füllkörpers (1) in etwa 1/15 bis 1/25 des Innendurchmessers (d) des Füllkörpers (1) beträgt, und daß seine Höhe (hr) in etwa 1/30 bis 1/40 der Höhe (H) des Füllkörpers (1) beträgt.

13. Füllkörper nach Anspruch 11, dadurch gekennzeichnet, daß der Vorsprung des Flansches in etwa 6 mm und/oder seine Höhe (hr) in etwa 2 mm beträgt.

14. Füllkörper nach einem der vorangehenden Ansprüche, dadurch gekennzeichnet, daß das Verhältnis der Höhe (H) des Füllkörpers (1) zu seinem Innendurchmesser (d) in etwa 1:1,5 bis 1:2 beträgt.

15. Füllkörper nach Anspruch 14, dadurch gekennzeichnet, daß seine Höhe (H) in etwa 70 mm und/oder sein Innendurchmesser (d) in etwa 110 mm und/oder sein Außendurchmesser (D) in etwa 125 mm beträgt.

16. Füllkörper nach einem der vorangehenden Ansprüche, dadurch gekennzeichnet, daß die Breite mindestens eines Fensterstegs (5a-5h) in etwa 10 mm beträgt.

17. Füllkörper nach einem der vorangehenden Ansprüche, dadurch gekennzeichnet, daß der Füllkörper (1) aus einem Kunststoffmaterial, aus Metall, insbesondere Blech, oder aus Keramik gefertigt ist.
